# EUROPÄISCHE PATENTSCHRIFT

(11) **EP 2 701 065 B1**
(45) Veröffentlichungstag und Bekanntmachung des Hinweises auf die Patenterteilung: **25.02.2015**
(21) Anmeldenummer: 12181713.4
(22) Anmeldetag: 24.08.2012
(51) Int. Cl.: G06F 11/20, G05B 19/02, G06F 11/16

(54) **Verfahren zum Betreiben eines redundanten Automatisierungssystems**
Method for operating a redundant automation system
Procédé de fonctionnement d'un système d'automatisation redondant

(43) Veröffentlichungstag der Anmeldung: 26.02.2014
(73) Patentinhaber: Siemens Aktiengesellschaft, 80333 München (DE)
(72) Erfinder: Grosch, Thomas, 90574 Roßtal (DE); Laforsch, Jürgen, 76187 Karlsruhe (DE); Renschler, Albert, 76275 Ettlingen (DE)

(56) Entgegenhaltungen:
- EP-A2- 1 291 744
- WO-A1-2012/003862
- FR-A1- 2 700 401
- US-A1- 2005 021 751

## Beschreibung

Die Erfindung betrifft ein Verfahren zum Betreiben eines redundanten, mit einem ersten und einem zweiten Teilsystem versehenen Automatisierungssystems, wobei eines der Teilsysteme als Master und das andere Teilsystem als Slave betrieben wird und wobei die Teilsysteme zum Versenden und Empfangen von Nachrichten mit Sende- und Empfangstasks versehen sind. Darüber hinaus betrifft die Erfindung ein redundantes Automatisierungssystem, welches zur Durchführung des Verfahrens geeignet ist.

Ein derartiges Verfahren, das Mechanismen einer Intertask-Kommunikation aufweist, sowie ein derartiges redundantes Automatisierungssystem zur Durchführung dieses Verfahrens sind in der Automatisierungstechnik an sich bekannt. Im Umfeld dieser Automatisierungstechnik werden verstärkt hochverfügbare Lösungen (H-Systeme) gefordert, welche geeignet sind, eventuell auftretende Stillstandszeiten der Anlage auf ein Minimum zu reduzieren. Die Entwicklung solcher hochverfügbarer Lösungen ist sehr kostenintensiv, wobei ein im Automatisierungsumfeld gewöhnlich eingesetztes H-System sich dadurch auszeichnet, dass zwei oder mehrere Teilsysteme in Form von Automatisierungsgeräten oder Rechnersystemen über eine Synchronisationsverbindung miteinander gekoppelt sind. Auf die an dieses H-System angeschlossenen Peripherieeinheiten können prinzipiell beide Teilsysteme lesend und/oder schreibend zugreifen. Eines der beiden Teilsysteme ist bezüglich der an das System angeschlossenen Peripherie führend. Dies bedeutet, dass Ausgaben zu Peripherieeinheiten bzw. Ausgangsinformationen für diese Peripherieeinheiten nur von einem der beiden Teilsysteme durchgeführt werden, welches als Master arbeitet bzw. die Masterfunktion übernommen hat. Damit beide Teilsysteme synchron ablaufen können, werden diese über die Synchronisationsverbindung in regelmäßigen Abständen synchronisiert.

Bezüglich der Häufigkeit der Synchronisation und deren Umfang können verschiedene Ausprägungen unterschieden werden (warmstandby, hot-standby).

Häufig wird von einem H-System ein stoßfreies "Failover" gefordert, falls eines der Teilsysteme ausfällt und auf das andere Teilsystem umgeschaltet werden muss. Dies bedeutet, dass trotz dieser ungeplanten Umschaltung bzw. diesem ungeplanten Wechsel von einem auf das andere Teilsystem diese Umschaltung bzw. dieser Wechsel sich nicht störend auf den zu steuernden technischen Prozess auswirkt. Dabei ist zulässig, dass an den Ausgängen der angeschlossenen Peripherie eine (kurze) Totzeit auftreten darf, während der die Ausgänge auf ihren zuletzt gültigen Prozessausgangswerten verharren. Ein Sprung (Stoß) der Werte an diesen Ausgängen aufgrund der Umschaltung ist jedoch nicht erwünscht und sollte daher vermieden werden. Unter stoßfrei ist daher auch die Stetigkeit des Kurvenverlaufs der Prozessausgangswerte zu verstehen.
Um dies zu erreichen, müssen die beiden Teilsysteme zum Zeitpunkt des Ausfalls den gleichen Systemzustand aufweisen. Dies wird durch das geeignete Synchronisationsverfahren sichergestellt. Verarbeiten beide Teilsysteme die Eingangsinformationen (Eingaben) des Prozesses, so befinden sich beide Systeme dann im gleichen Systemzustand, wenn sie - bei gleichen Prozesseingangsdaten bzw. Prozesseingangsinformationen - ihre jeweiligen "thread-globalen" Daten (gemeinsame Daten von Programmen, insbesondere von Programmen unterschiedlicher Prioritäten) in gleicher Weise verändern. Um dies zu erreichen, stellt das Synchronisationsverfahren sicher, dass die einzelnen Threads der beiden Teilsysteme in gleicher Art und Weise unterbrochen bzw. abgearbeitet werden. Damit ergibt sich ein identisches "Threadgebirge".

Aus der EP 1 291 744 A2 ist ein Synchronisationsverfahren und eine Synchronisationsvorrichtung für ein redundant aus mindestens zwei Teilsystemen aufgebautes Automatisierungssystem bekannt. Die Teilsysteme zur Steuerung eines Prozesses führen jeweils mehrere Tasks aus und sind über ein oder mehrere Kommunikationsmittel miteinander verbunden, über das oder die sie sich miteinander synchronisieren.

In der älteren europäischen Patentanmeldung 12166006.2 wird ein Verfahren zum Betreiben eines redundanten mit einem ersten und einem zweiten Teilsystem versehenen Automatisierungssystem vorgeschlagen, mittels welchem im Hinblick auf eine Synchronisation der Programmverarbeitung auf den beiden Teilsystemen auf eine zeitlich synchrone Kommunikation zwischen den Teilsystemen verzichtet wird. Eins dieser Teilsysteme in Form eines Masters wartet nicht (aktiv) auf eine Antwort des anderen Teilsystems in Form eines Slaves um seine Programmverarbeitung fortzusetzen; die Übertragung aller relevanten Informationen von dem Master zu dem Slave erfolgt zeitlich asynchron. Dadurch wird die Verarbeitungsleistung des Masters von der für eine Ereignissynchronisation zur Verfügung stehenden Kommunikationsbandbreite entkoppelt, was insbesondere im Hinblick auf das zunehmende Ungleichgewicht zwischen der Steigerung der Verarbeitungsleistung der Prozessoren einerseits und der Steigerung der Kommunikationsleistung andererseits von Bedeutung ist; denn die Kommunikationsleistung kann gewöhnlich nicht mit der zunehmenden Verarbeitungsleistung Schritt halten.
Die Synchronisation der beiden Teilsysteme nach dem Auftreten eines Ereignisses erfolgt derart, dass sowohl der Master als auch der Slave aufgrund dieses Ereignisses gleiche Programmpfade (pfadsynchron) durchlaufen, wobei die Durchläufe zeitlich asynchron erfolgen. Dies bedeutet, dass der Master im Hinblick auf die Programmver- bzw. -bearbeitung dem Slave zeitlich vorausläuft bzw. der Slave dem Master zeitlich nachläuft. Unter einem "Nachlauf" bzw. "Vorauslauf" wird in diesem Zusammenhang die zeitliche Differenz zwischen dem Beginn der Verarbeitung der Verarbeitungsabschnitte durch den Master und dem Beginn der Verarbeitung der Verarbeitungsabschnitte durch den Slave, was dem Zeitpunkt des Auftretens des Freigabesignals entspricht, verstanden.

Aufgrund dieses Vor- bzw. Nachlaufs sind Maßnahmen erforderlich, um im Hinblick auf eine programmpfadsynchrone Verarbeitung ein Versenden und Empfangen von Nachrichten mittels Sende- und Empfangstasks in geeigneter Weise zu bewerkstelligen. Beispielsweise für den Fall, dass eine Kommunikationstask des jeweiligen Teilsystems Nachrichten an die Empfangstask des jeweiligen Teilssystems sendet, muss sichergestellt sein, dass die Sende- und Empfangsreihenfolge auf dem Slave der auf dem Master entspricht.

Würde - wie an sich bekannt - die Nachrichtenverarbeitung des Slaves analog zu der des Masters erfolgen, könnte sich im Master und im Slave aufgrund des zeitlich asynchronen Durchlaufs der Programmpfade eine unterschiedliche Verarbeitungs-Reihenfolge der Nachrichten ergeben, wodurch es zu Störungen eines technischen Prozesses im Hinblick auf eine ordnungsgemäße Steuerung kommen könnte.

Der Erfindung liegt daher die Aufgabe zugrunde, ein Verfahren der eingangs genannten Art anzugeben, welches derartige Nachteile vermeidet. Darüber hinaus ist ein redundantes Automatisierungssystem zu schaffen, welches zur Durchführung des Verfahrens geeignet ist.

Diese Aufgabe wird im Hinblick auf das Verfahren durch die im kennzeichnenden Teil des Anspruchs 1 angegebenen, bezüglich des Automatisierungssystems durch die im kennzeichnenden Teil des Anspruchs 5 angegebenen Maßnahmen gelöst.

Vorteilhaft ist, dass auch im Rahmen eines zeitlich asynchronen Durchlaufs eines Programmpfades auf dem Master und dem Slave ein Nachrichtenaustausch programmpfadsynchron bewerkstelligt wird.
Das Verfahren kann selbstverständlich auch in einem Automatisierungssystem eingesetzt werden, welches eine zeitlich synchrone Verarbeitung der Programmpfade verwirklicht.

Mittels der im Anspruch 2 angegebenen Maßnahmen können zweite Nachrichten mittels einer Sendetask des Masters oder des Slaves sowohl zu einer Empfangstask des Masters als auch zu einer Empfangstask des Slaves übermittelt werden.
Liest der Master beispielweise Prozesseingangswerte ein, die der Master in Form eines Telegramms von einer Peripherieeinheit empfängt, so muss eine Sendetask des Masters diese Prozesseingangswerte für eine weitere Verarbeitung mittels einer Nachricht sowohl einer eigenen Empfangstask als auch einer Empfangstask des Slaves bereitstellen. Dies bedeutet, dass in diesem Fall die Sendetask nur auf dem Master, die Empfangstask dagegen sowohl auf dem Master als auch auf dem Slave abläuft. Für den Fall, dass der Slave die Prozesseingangswerte einliest, muss die Sendetask des Slaves diese die Prozesseingangswerte repräsentierende Nachricht der jeweiligen Empfangstasks des Masters und des Slaves übermitteln. In beiden Fällen ist eine Sendetask - entweder auf dem Master oder dem Slave - sowie zwei Empfangstasks - jeweils eine auf dem Master und dem Slave - aktiv. Die Prozesseingangsinformationen werden zeitlich asynchron und programmpfadsynchron in der gleichen Reihenfolge sowohl im Master als auch im Slave verarbeitet, wodurch ein störungsfreier redundanter Betrieb des Automatisierungssystems ermöglicht wird.

In einer Ausgestaltung der Erfindung ist vorgesehen, dass für den Fall, dass eine dritte Nachricht mittels einer dritten Sendetask eines der Teilsysteme zu einer dritten Empfangstask dieses Teilsystems zu übermitteln ist, die dritte Nachricht mittels des Nachrichten-Handlers dieses Teilsystems der Empfangstask dieses Teilsystems übermittelt wird. Diese Nachricht wird z. B. in einem so genannten Layer-Stack des Masters oder des Slaves von einer Ebene zur nächsten Ebene durchgereicht.

In einer weiteren Ausgestaltung der Erfindung ist vorgesehen, dass für den Fall, dass eine vierte Nachricht mittels einer vierten Sendetask jeden Teilnehmers nur zu einer vierten Empfangstask eines der Teilnehmer zu übermitteln ist, diese Nachricht nur dann von dem Nachrichten-Handler des jeweiligen Teilsystems an die Empfangstask des jeweiligen Teilsystems weitergeleitet wird, falls dieser Nachrichten-Handler erkennt, dass dieses Teilsystem Empfänger dieser Nachricht ist. Beispielsweise kann es vorkommen, dass ein Bedien- und Beobachtungsgerät nur an den Master angeschlossen und dass diesem Bedien- und Beobachtungsgerät ein Telegramm zu übermitteln ist. Der Nachrichten-Handler des Masters erkennt, dass das Bedien- und Beobachtungsgerät an den Master angeschlossen ist und leitet daher die das Telegramm repräsentierende Nachricht an die Empfangstask des Masters weiter. Aus dieser empfangenen Nachricht erzeugt z. B. ein Steuerprogramm des Masters ein Telegramm, welches der Master dem Bedien- und Beobachtungsgerät übermittelt. Der Nachrichten-Handler des Slaves erkennt dagegen, dass kein Bedien- und Beobachtungsgerät an den Slave angeschlossen ist und verwirft daher die Nachricht, was bedeutet, dass diese Nachricht nicht an die Empfangstask des Slaves weitergeleitet wird.

Es wird darauf hingewiesen, dass unter einer Sende- oder Empfangstask auch ein Sende- oder Empfangsthread oder ein sonstiger geeigneter Sende- oder Empfangs-Baustein oder geeigneter Programmcode zur Verwirklichung einer Kommunikation innerhalb eines Teilsystems oder zwischen den Teilsystemen verstanden wird. Ferner wird darauf hingewiesen, dass unter einer ersten, zweiten, dritten und vierten Nachricht lediglich unterschiedliche Nachrichten zu verstehen sind; es wird darunter keine zeitliche Reihenfolge im Hinblick auf ein Senden bzw. Empfangen dieser Nachrichten verstanden, dritte Nachrichten können z. B. vor ersten oder zweiten Nachrichten gesendet oder empfangen werden.

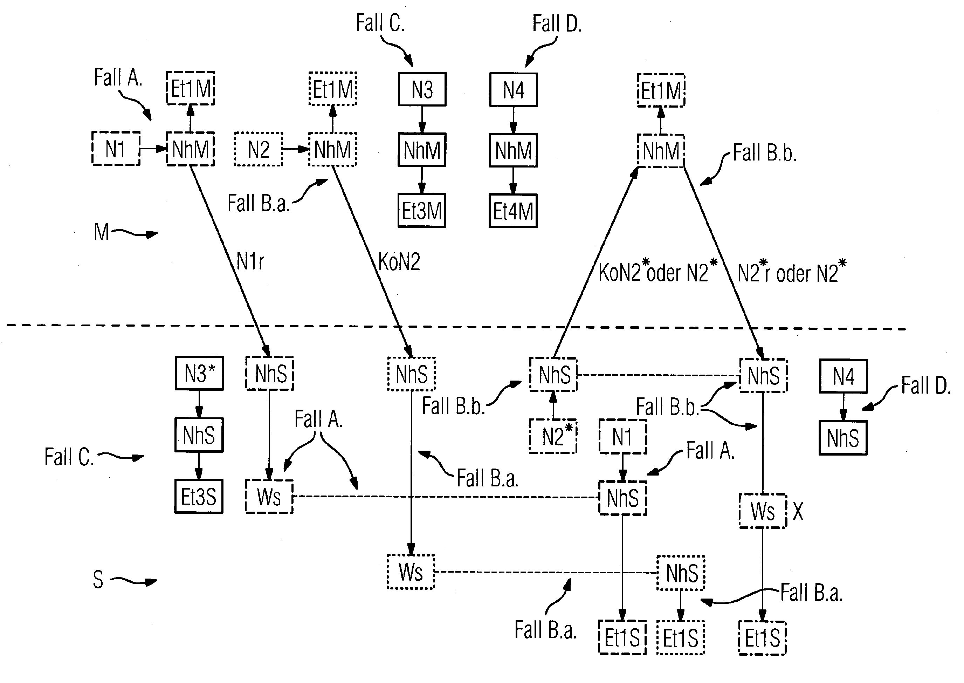

Die Erfindung wird nachfolgend anhand eines Ausführungsbeispiels unter Bezugnahme auf die einzige Figur der Zeichnung näher erläutert. Die Figur der Zeichnung zeigt in vereinfachter Darstellung Abläufe eines Informationsaustausches zwischen Sende- und Empfangstask eines redundanten Automatisierungssystems.

Der Einfachheit halber sind im Folgenden folgende Bezeichnungen bzw. Formulierungen für Fälle A. bis D. vorgesehen:
A. Eine Sende- sowie eine Empfangstask wird als zweikanalig bezeichnet, falls eine Nachricht sowohl von einer Sendetask des Masters zu einer Empfangstask des Masters als auch von einer der Master-Sendetask entsprechenden Sendetask des Slaves zu einer der Master-Empfangstask entsprechenden Empfangstask des Slaves zu übermitteln ist bzw. übermittelt wird. Mit anderen Worten: eine zweikanalige Sende- sowie eine zweikanalige Empfangstask laufen auf beiden Teilsystemen pfadsynchron ab.
B. Für den Fall, dass eine Nachricht mittels einer Sendetask des Masters oder des Slaves sowohl einer Empfangstask des Masters als auch einer dieser Empfangstask entsprechenden Empfangstask des Slaves zu übermitteln ist bzw. übermittelt wird, wird die Sendetask als einkanalige Sendetask und die Empfangstask als zweikanalige Empfangstask bezeichnet. Dabei ist zu unterscheiden, ob die Nachricht
   a. mittels einer Sendetask des Masters oder
   b. mittels einer Sendetask des Slaves der Empfangstask des Master und des Slaves gesendet wird.
C. Für den Fall, dass die Nachricht mittels der Sendetask eines der Teilsysteme zu der Empfangstask dieses Teilsystems zu übermitteln ist bzw. übermittelt wird, wird bezüglich der Sendetask von einer einkanaligen Sendetask und im Hinblick auf die Empfangstask von einer einkanaligen Empfangstask gesprochen.
D. Eine Sendetask wird als zweikanalige Sendetask und eine Empfangstask als einkanalige Empfangstask benannt, falls eine Nachricht mittels der entsprechenden Sendetask jeden Teilnehmers nur zu einer Empfangstask eines der Teilnehmer zu übermitteln ist bzw. übermittelt wird.

Darüber hinaus wird im Folgenden angenommen, dass sowohl ein Master als auch ein Slave bzw. eine Reserve des redundanten Automatisierungssystems jeweils ein Steuerprogramm zur Steuerung eines technischen Prozesses verarbeitet, wobei die Verarbeitung programmpfadsynchron, die Durchläufe dieser Programmpfade allerdings zeitlich asynchron erfolgen. Im Zusammenhang auf eine derartige Verarbeitung wird auf die ältere europäische Patentanmeldung 12166006.2 verwiesen.

Es wird zunächst auf eine Übertragung einer ersten Nachricht N1, die von einer zweikanaligen Sendetask zu einer zweikanaligen Empfangstask (Fall A.) übermittelt wird sowie auf eine Übertragung einer zweiten Nachricht N2, die von einer einkanaligen Sendetask zu einer zweikanaligen Empfangstask (Fall B.) übermittelt wird, näher eingegangen.

Diese erste Nachricht N1, welche sowohl von einem Master M als auch von einem Slave S zu verarbeiten ist, übermittelt eine erste Sendetask des Masters M einem Nachrichten-Handler NhM dieses Masters M sowie eine erste Sendetask des Slaves S einem Nachrichten-Handler NhS dieses Slaves S. Der Nachrichten-Handler NhM des Masters M leitet diese Nachricht N1 über einen Master-Systemkern oder ein Master-Betriebssystem einer ersten Empfangstask Et1M weiter und übermittelt ferner dem Nachrichten-Handler NhS des Slaves S eine Nachrichten-Referenz N1r, die dem Slave S anzeigt, dass der Master M diese Nachricht N1 seiner Empfangstask Et1M übermittelt hat. Dieser Nachrichten-Handler NhS des Slaves S dagegen leitet die Nachricht N1 zunächst nicht über einen Slave-Systemkern oder ein Slave-Betriebssystem an eine erste Empfangstask Et1S des Slaves S weiter, sondern speichert in einer Warteschlange Ws des Slaves S die Nachrichten-Referenz N1r ab; denn aufgrund des zeitlichen Nachlaufs des Slaves S kann diese erste Nachricht N1 erst dann der Slave-Empfangstask Et1S weitergeleitet werden, wenn die zweikanaligen Tasks des Slaves S den gleichen Bearbeitungsfortschritt erreicht haben wie die zweikanaligen Tasks des Masters M zu dem Zeitpunkt, zu dem die Nachricht N1 auf dem Master M an die Empfangstask Et1M weitergeleitet worden ist. In dieser Warteschlange Ws können sowohl Nachrichten-Referenzen als auch - wie im Folgenden noch gezeigt wird - Nachrichten hinterlegt werden, wobei die zeitliche Reihenfolge der Hinterlegung die Reihenfolge der Nachrichtenübertragung bzw. die Sendereihenfolge von mittels des Masters M übermittelten Nachrichten repräsentiert.

Es wird angenommen, dass eine auf die erste Nachricht N1 folgende zweite Nachricht N2 von einer einkanaligen Sende- zu der zweikanaligen Empfangstask Et1M, Et1S zu übermitteln ist (Fall B.), allerdings aufgrund des Slave-Nachlaufs die erste Nachricht N1 durch den Nachrichten-Handler NhS des Slaves S der ersten Slave-Empfangstask Et1S noch nicht übermittelt wurde.
Dabei wird zunächst der Fall betrachtet, dass diese zweite Nachricht N2 von einer zweiten Sendetask des Masters M übermittelt wird (Fall B.a.). Der Nachrichten-Handler NhM des Masters M leitet die zweite Nachricht N2 der ersten Empfangstask Et1M weiter und übermittelt dem Nachrichten-Handler NhS des Slaves S eine Kopie KoN2 dieser Nachricht N2, der diese Kopie KoN2 in der Warteschlange Ws hinterlegt.
In der Warteschlange Ws sind daher entsprechend der Master-Sendereihenfolge die Nachrichten-Referenz N1r und die Kopie KoN2 der zweiten Nachricht N2 hinterlegt, wobei der Slave S gemäß der zeitlichen Reihenfolge der Hinterlegung den Inhalt der Warteschlange Ws abarbeitet, um eine programmpfadsynchrone Verarbeitung im Master M und Slave S des redundanten Automatisierungsgerätes zu gewährleisten.
Aufgrund dessen, dass die Nachrichten-Referenz N1r der ersten Nachricht N1 vor der Kopie KoN2 der zweiten Nachricht N2 in der Warteschlange Ws hinterlegt wurde, wird diese Nachrichten-Referenz N1r vor der Kopie KoN2 der zweiten Nachricht N2 mittels des Nachrichten-Handlers NhS des Slaves S ausgelesen, wodurch dieser Nachrichten-Handler NhS die dieser Nachrichten-Referenz N1r zugeordnete erste Nachricht N1 der ersten Empfangstask Et1S des Slaves S übermittelt.
Nachdem die Nachrichten-Referenz N1r vom Nachrichten-Handler NhS des Slaves S aus der Warteschlange Ws ausgelesen und verarbeitet wurde, liest dieser Nachrichten-Handler NhS - für den Fall, dass der Slave S den gleichen Bearbeitungsfortschritt erreicht hat - in einem folgenden Schritt die Kopie der zweiten Nachricht KoN2 aus der Warteschlange WS aus und leitet diese seiner ersten Empfangstask Et1S zu.
Die Übermittlung bzw. Weiterleitung der ersten und zweiten Nachricht N1, N2 zu der Empfangstask Et1S des Slaves S, welche der ersten Empfangstasks Et1M des Masters M entspricht, ist abgeschlossen, wobei die Reihenfolge der Weiterleitung der des Masters M entspricht.

Wären in der Warteschlange Ws keine Nachrichten-Referenzen oder Nachrichten-Kopien hinterlegt, würde mittels des Nachrichten-Handlers NhS des Slaves S eine vom Master M zum Slave S übermittelte Nachrichten-Kopie direkt einer Slave-Empfangstask weitergeleitet werden, die Nachrichten-Kopie würde dann also nicht in der Warteschlange WS hinterlegt werden.

Anstatt (oder zusätzlich zu) der gemäß dem Fall B.a. beschriebenen Nachrichtenübermittlung kann es vorkommen, dass eine auf die erste Nachricht N1 folgende zweite Nachricht N2* einer einkanaligen Sendetask des Slaves S zu einer zweikanaligen Empfangstask Et1M, Et1S übermittelt wird (Fall B.b.), aufgrund des Slave-Nachlaufs die erste Nachricht N1 durch den Nachrichten-Handler NhS des Slaves S der ersten Slave-Empfangstask Et1S allerdings noch nicht übermittelt wurde.
In diesem Fall übermittelt eine Sendetask des Slaves S die zweite Nachricht N2* dem Nachrichten-Handler NhS, der - weil der Master M dem Slave S zeitlich vorausläuft - diese Nachricht N2* nicht direkt seiner Empfangstask Et1S zuführt, sondern diese abspeichert und die Kopie KoN2* der Nachricht N2* dem Nachrichten-Handler NhM des Masters M übermittelt. Dieser Nachrichten-Handler NhM leitet die Kopie KoN2* der Nachricht N2* seiner Empfangstask Et1M weiter und übermittelt zusätzlich dem Nachrichten-Handler NhS des Slaves S eine weitere Nachrichten-Referenz N2*r. Für den Fall, dass die Warteschlange Ws leer ist, was im vorliegenden Beispiel der Fall ist, da der Nachrichten-Handler NhS des Slaves S die erste Nachricht N1 (bzw. die Nachricht N1 und zusätzlich die zweite Nachricht N2 gemäß Fall B.a.) zwischenzeitlich bereits der ersten Slave-Empfangstask Et1S übermittelte, führt der Nachrichten-Handler NhS des Slaves S die der Nachrichten-Referenz N2r zugeordnete zweite Nachricht N2* direkt seiner ersten Empfangstask Et1S zu. Ansonsten (Warteschlange "nicht leer") hinterlegt der Nachrichten-Handler NhS die zweite Nachricht N2* in der Warteschlange Ws (in der Figur durch ein "X" gekennzeichnet). Die zweite Nachricht N2* würde im letztgenannten Fall erst dann der Empfangstask Et1S übermittelt werden, nachdem der Nachrichten-Handler NhS die vor dieser Nachricht N2* hinterlegten Nachrichten und Nachrichten-Referenzen verarbeitet hat und schließlich die Nachricht N2* aus der Warteschlange Ws ausliest.

Anstatt die zweite Nachricht N2* im Slave S zu hinterlegen und eine Kopie KoN2* dem Master M zu übermitteln, kann der Nachrichten-Handler NhS des Slaves S derart ausgebildet sein, die zweite Nachricht N2* nicht zu speichern sondern diese direkt dem Nachrichten-Handler NhM des Masters M zuzuführen, wobei in diesem Fall der Nachrichten-Handler NhM derart ausgebildet ist, diese Nachricht N2* der ersten Empfangstask Et1M des Masters M weiterzuleiten und anschließend diese Nachricht N2* dem Nachrichten-Handler NhS des Slaves S wieder zu übermitteln bzw. "zurückzuspielen". In der beschriebenen Art und Weise übermittelt der Nachrichten-Handler NhS diese Nachricht N2* der ersten Slave-Empfangstask Et1S für den Fall, dass die Warteschlange Ws leer ist, was - wie erläutert - im vorliegenden Beispiel der Fall ist. Ansonsten (Warteschlange "nicht leer") hinterlegt der Nachrichten-Handler NhS - wie beschrieben - die Nachricht N2* zunächst in der Warteschlange Ws. Die Nachricht N2* würde wiederum erst dann der Empfangstask Et1S übermittelt werden, nachdem der Nachrichten-Handler NhS die vor dieser Nachricht N2* hinterlegten Nachrichten und Nachrichten-Referenzen verarbeitet hat und schließlich die Nachricht N2* aus der Warteschlange Ws ausliest.

Im Folgenden wird der Fall C. betrachtet. Dort wird eine dritte Nachricht mittels der Sendetask eines der Teilsysteme zu der Empfangstask dieses Teilsystems übermittelt (einkanalige Sendetask und einkanalige Empfangstask; einkanalige Tasks laufen nicht pfadsynchron). Eine derartige dritte Nachricht N3 bzw. N3* einer Sendetask des Masters M bzw. des Slaves S übermittelt der jeweilige Nachrichten-Handler NhM, NhS einer dritten Empfangstask Et3M, Et3S des Masters M bzw. des Slaves S.

Es wird im Folgenden angenommen, dass ein Bedien- und Beobachtungsgerät (B&B) nur an den Master M angeschlossen ist. Der Nachrichten-Handler NhM des Masters M erkennt, dass dieses Bedien- und Beobachtungsgerät an den Master M angeschlossen ist, und übermittelt eine ein B&B-Telegramm repräsentierende vierte Nachricht N4 der Master-Sendetask an eine vierte Empfangstask Et4M des Masters M (Fall D.). Der Nachrichten-Handler NhS des Slaves S erkennt dagegen, dass das Bedien- und Beobachtungsgerät nicht an den Slave S angeschlossen ist und verwirft daher die vierte Nachricht N4 einer Slave-Sendetask, was bedeutet, dass diese Nachricht N4 nicht an eine vierte Empfangstask des Slaves S weitergeleitet wird.

## Patentansprüche

1. Verfahren zum Betreiben eines redundanten, mit einem ersten und einem zweiten Teilsystem versehenen Automatisierungssystems, wobei
- eines der Teilsysteme als Master (M) und das andere Teilsystem als Slave (S) betrieben wird,
- die Teilsysteme (M, S) zum Versenden und Empfangen von Nachrichten mit Sende- und Empfangstasks versehen sind,
**dadurch gekennzeichnet, dass** eine erste Nachricht (N1) sowohl von einer ersten Sendetask des Masters (M) zu einer ersten Empfangstask (Et1M) des Masters (M) als auch von einer ersten Sendetask des Slaves (S) zu einer ersten Empfangstask (Et1S) des Slaves (S) übermittelt wird, indem
- die erste Nachricht (N1) mittels eines Nachrichten-Handlers (NhM) des Masters (M) der Empfangstask (Et1M) des Masters (M) weitergeleitet wird und ferner mittels dieses Nachrichten-Handlers (NhM) einem Nachrichten-Handler (NhS) des Slaves (S) eine Nachrichten-Referenz (N1r) zum Eintragen in eine Warteschlange (Ws) des Slaves (S) übermittelt wird, wobei in der Warteschlange (Ws) die Sende-Reihenfolge von mittels des Masters (M) übermittelten Nachrichten angezeigt wird,
- nach dem Auslesen der Nachrichten-Referenz (N1r) aus der Warteschlange (Ws) mittels des Nachrichten-Handlers (NhS) des Slaves (S) die erste Nachricht (N1) mittels dieses Nachrichten-Handlers (NhS) der Empfangstask (Et1S) des Slaves (S) weitergeleitet wird.

2. Verfahren nach Anspruch 1, **dadurch gekennzeichnet, dass**
- eine zweite Nachricht (N2) mittels einer zweiten Sendetask des Masters (M) sowohl der ersten Empfangstask (Et1M) des Masters (M) als auch der ersten Empfangstask (Et1S) des Slaves (S) übermittelt wird, indem diese Nachricht (N2) mittels des Nachrichten-Handlers (NhM) des Masters (M) der Empfangstask (Et1M) des Masters (M) zugeführt und eine Kopie dieser Nachricht (KoN2) dem Nachrichten-Handler (NhS) des Slaves (S) übermittelt wird, wobei mittels diesem Nachrichten-Handler (NhS) die Nachrichten-Kopie (KoN2) der Empfangstask (Et1S) des Slaves (S) weitergeleitet wird, falls in der Warteschlange (Ws) keine Nachrichten-Referenzen oder Nachrichten hinterlegt sind, ansonsten die Kopie dieser Nachricht (Kon2) zunächst in die Warteschlange (Ws) zum Weiterleiten an die Empfangstask (Et1S) eintragen wird, oder
- die zweite Nachricht (N2) mittels einer zweiten Sendetask des Slaves (S) sowohl der ersten Empfangstask (Et1S) des Slaves (S) als auch der ersten Empfangstask (Et1M) des Masters (M) übermittelt wird,
- indem diese zweite Nachricht (N2) mittels des Nachrichten-Handlers (NhS) des Slaves (S) gespeichert wird und eine Kopie dieser Nachricht (KoN2) dem Nachrichten-Handler (NhM) des Masters (M) zum Weiterleiten an die Empfangstask (Et1M) des Masters (M) übermittelt wird, wobei durch den Nachrichten-Handler (NhM) des Masters (M) dem Nachrichten-Handler (NhS) des Slaves (S) eine weitere Nachrichten-Referenz (N2r) übermittelt wird, wobei mittels des Nachrichten-Handlers (NhS) des Slaves (S) die gespeicherte Nachricht (N2) der Empfangstask (Et1S) des Slaves (S) übermittelt wird, falls in der Warteschlange (Ws) keine Nachrichten-Referenzen oder Nachrichten hinterlegt sind, ansonsten die Nachrichten-Referenz (N2r) zunächst in der Warteschlange (Ws) hinterlegt wird, wobei nach dem Auslesen der Nachrichten-Referenz (N2r) aus der Warteschlange (Ws) die Nachrichten-Kopie (KoN2) der Empfangstask (Et1S) des Slaves (S) übermittelt wird, oder
- indem die zweite Nachricht (N2) mittels des Nachrichten-Handlers (NhS) des Slaves (S) dem Nachrichten-Handler (NhM) des Masters (M) zum Weiterleiten an die Empfangstask (Et1M) des Masters (M) übermittelt wird, wobei durch den Nachrichten-Handler (NhM) des Masters (M) dem Nachrichten-Handler (NhS) des Slaves (S) die Nachricht (N2) übermittelt wird, wobei mittels diesem Nachrichten-Handler (NhS) die Nachricht (N2) der Empfangstask (Et1S) des Slaves (S) übermittelt wird, falls in der Warteschlange (Ws) keine Nachrichten-Referenzen oder Nachrichten hinterlegt sind, ansonsten die Nachricht (N2) in der Warteschlange (Ws) zum Weiterleiten an die Empfangstask (Et1S) eingetragen wird.

3. Verfahren nach Anspruch 1 oder 2, **dadurch gekennzeichnet, dass** eine dritte Nachricht (N3) mittels einer dritten Sendetask eines der Teilsysteme (M, S) zu einer dritten Empfangstask (Et3M, Et3S) dieses Teilsystems (M, S) übermittelt wird, indem mittels des Nachrichten-Handlers (NhM, NhS) dieses Teilsystems (M, S) diese Nachricht (N3) der dritten Empfangstask (Et3M, Et3S) dieses Teilsystems (M, S) übermittelt wird.

4. Verfahren nach einem der Ansprüche 1 bis 3, **dadurch gekennzeichnet, dass** eine vierte Nachricht (N4) mittels einer vierten Sendetask jeden Teilnehmers (M, S) nur zu einer vierten Empfangstask (Et4M, Et4S) eines der Teilnehmer (M, S) übermittelt wird, indem diese Nachricht (N4) nur dann von dem Nachrichten-Handler (NhM, NhS) des jeweiligen Teilsystems (M, S) an die Empfangstask (Et4M, Et4S) des jeweiligen Teilsystems (M, S) weitergeleitet wird, falls dieser Nachrichten-Handler (NhM, NhS) erkennt, dass dieses Teilsystem (M, S) Empfänger dieser Nachricht (N4) ist.

5. Redundantes mit einem ersten und einem zweiten Teilsystem (M, S) versehenes Automatisierungssystem, wobei
- eines der Teilsysteme als Master (M) und das andere Teilsystem als Slave (S) arbeitet,
- die Teilsysteme (M, S) zum Versenden und Empfangen von Nachrichten mit Sende- und Empfangstasks versehen sind,
**dadurch gekennzeichnet, dass** das Automatisierungssystem dazu ausgebildet ist, eine erste Nachricht (N1) sowohl von einer ersten Sendetask des Masters (M) zu einer ersten Empfangstask (Et1M) des Masters (M) als auch von einer ersten Sendetask des Slaves (S) zu einer ersten Empfangstask (Et1S) des Slaves (S) zu übermitteln, indem
- ein Nachrichten-Handler (NhM) des Masters (M) die erste Nachricht (N1) der Empfangstask (Et1M) des Masters (M) weiterleitet und eine Nachrichten-Referenz (N1r) zum Eintragen in eine Warteschlange (Ws) des Slaves (S) einem Nachrichten-Handler (NhS) des Slaves (S) übermittelt, wobei die Warteschlange (Ws) zum Anzeigen der Sende-Reihenfolge von mittels des Masters (M) übermittelten Nachrichten vorgesehen ist,
- der Nachrichten-Handler (NhS) des Slaves (S) nach dem Auslesen der Nachrichten-Referenz (N1r) aus der Warteschlange (Ws) die erste Nachricht (N1) der Empfangstask (Et1S) des Slaves (S) weiterleitet.

6. Redundantes Automatisierungssystem nach Anspruch 5, **dadurch gekennzeichnet, dass** das Automatisierungssystem dazu ausgebildet ist,
- eine zweite Nachricht (N2) mittels einer zweiten Sendetask des Masters (M) sowohl der ersten Empfangstask (Et1M) des Masters (M) als auch der ersten Empfangstask (Et1S) des Slaves (S) zu übermitteln, indem der Nachrichten-Handler (NhM) des Masters (M) diese Nachricht (N2) der Empfangstask (Et1M) des Masters (M) zuführt und eine Kopie dieser Nachricht (KoN2) dem Nachrichten-Handler (NhS) des Slaves (S) übermittelt, welcher die Nachrichten-Kopie (KoN2) zur Empfangstask (Et1S) des Slaves (S) weiterleitet, falls in der Warteschlange (Ws) keine Nachrichten-Referenzen oder Nachrichten hinterlegt sind, ansonsten die Kopie dieser Nachricht (KoN2) in die Warteschlange (Ws) des Slaves (S) zum Weiterleiten an die Empfangstask (Et1S) einträgt, oder
- die zweite Nachricht (N2) mittels einer zweiten Sendetask des Slaves (S) sowohl der ersten Empfangstask (Et1S) des Slaves (S) als auch der ersten Empfangstask (Et1M) des Masters (M) zu übermitteln,
- indem der Nachrichten-Handler (NhS) des Slaves (S) diese Nachricht (N2) speichert und eine Kopie dieser weiteren Nachricht (KoN2) dem Nachrichten-Handler (NhM) des Masters (M) zum Weiterleiten an die Empfangstask (Et1M) des Masters (M) übermittelt, wobei der Nachrichten-Handler (NhM) des Masters (M) dem Nachrichten-Handler (NhS) des Slaves (S) eine weitere Nachrichten-Referenz (N2r) übermittelt, wobei der Nachrichten-Handler (NhS) des Slaves (S) die Nachricht (N2) der Empfangstask (Et1S) des Slaves (S) weiterleitet, falls in der Warteschlange (Ws) keine Nachrichten-Referenzen oder Nachrichten hinterlegt sind, ansonsten die weitere Nachrichten-Referenz (N2r) in die Warteschlange (Ws) zur Weiterleitung der Nachrichten-Kopie (KoN2) an die Empfangstask (Et1S) einträgt, oder
- indem der Nachrichten-Handler (NhS) des Slaves (S) die zweite Nachricht (N2) dem Nachrichten-Handler (NhM) des Masters (M) zum Weiterleiten an die Empfangstask (Et1M) des Masters (M) übermittelt, wobei der Nachrichten-Handler (NhM) des Masters (M) dem Nachrichten-Handler (NhS) des Slaves (S) diese Nachricht (N2) übermittelt, wobei dieser Nachrichten-Handler (NhS) die Nachricht (N2) an die Empfangstask (Et1S) des Slaves (S) weiterleitet, falls in der Warteschlange (Ws) keine Nachrichten-Referenzen oder Nachrichten hinterlegt sind, ansonsten die Nachricht (N2) in der Warteschlange (Ws) zum Weiterleiten an die Empfangstask (Et1S) einträgt.

7. Redundantes Automatisierungssystem nach Anspruch 5 oder 6, **dadurch gekennzeichnet, dass** das Automatisierungssystem ferner dazu ausgebildet ist, eine dritte Nachricht (N3) mittels einer dritten Sendetask eines der Teilsysteme (M, S) zu einer dritten Empfangstask (Et3M, Et3S) dieses Teilsystems (M, S) zu übermitteln, indem der Nachrichten-Handler (NhM, NhS) dieses Teilsystems (M, S) diese Nachricht (N3) der Empfangstask (Et3M, Et3S) dieses Teilsystems (M, S) übermittelt.

8. Redundantes Automatisierungssystem nach einem der Ansprüche 5 bis 7, **dadurch gekennzeichnet, dass** das Automatisierungssystem ferner dazu ausgebildet ist, eine vierte Nachricht (N4) mittels einer vierten Sendetask jeden Teilnehmers (M, S) nur zu einer vierten Empfangstask (Et4M, Et4S) eines der Teilnehmer (M, S) zu übermitteln, indem der Nachrichten-Handler (NhM, NhS) des jeweiligen Teilsystems (M, S) diese Nachricht (N4) nur dann an die vierte Empfangstask (Et4M, Et4S) des jeweiligen Teilsystems (M, S) weiterleitet, falls dieser Nachrichten-Handler (NhM, NhS) erkennt, dass dieses Teilsystem (M, S) Empfänger dieser vierten Nachricht (N4) ist.

## Claims

1. Method for operating a redundant automation system provided with a first subsystem and a second subsystem,
- one of the subsystems being operated as a master (M) and the other subsystem being operated as a slave (S),
- the subsystems (M, S) being provided with transmission and reception tasks in order to transmit and receive messages,
**characterized in that** a first message (N1) is transmitted both from a first transmission task of the master (M) to a first reception task (Et1M) of the master (M) and from a first transmission task of the slave (S) to a first reception task (Et1S) of the slave (S) by virtue of
- the first message (N1) being forwarded to the reception task (Et1M) of the master (M) using a message handler (NhM) of the master (M) and this message handler (NhM) also being used to transmit a message reference (N1r) to a message handler (NhS) of the slave (S) for entry in a queue (Ws) of the slave (S), the queue (Ws) indicating the transmission sequence of messages transmitted using the master (M),
- the first message (N1) being forwarded, after the message reference (N1r) has been read from the queue (Ws) using the message handler (NhS) of the slave (S), to the reception task (Et1S) of the slave (S) using this message handler (NhS).

2. Method according to Claim 1, **characterized in that**
- a second message (N2) is transmitted both to the first reception task (Et1M) of the master (M) and to the first reception task (Et1S) of the slave (S) using a second transmission task of the master (M) by virtue of this message (N2) being supplied to the reception task (Et1M) of the master (M) using the message handler (NhM) of the master (M) and a copy of this message (KoN2) being transmitted to the message handler (NhS) of the slave (S), the message copy (KoN2) being forwarded to the reception task (Et1S) of the slave (S) using this message handler (NhS) if the queue (Ws) does not store any message references or messages, and the copy of this message (KoN2) otherwise first of all being entered in the queue (Ws) for forwarding to the reception task (Et1S), or
- the second message (N2) is transmitted both to the first reception task (Et1S) of the slave (S) and to the first reception task (Et1M) of the master (M) using a second transmission task of the slave (S)
- by virtue of this second message (N2) being stored using the message handler (NhS) of the slave (S) and a copy of this message (KoN2) being transmitted to the message handler (NhM) of the master (M) for forwarding to the reception task (Et1M) of the master (M), the message handler (NhM) of the master (M) transmitting a further message reference (N2r) to the message handler (NhS) of the slave (S), the stored message (N2) being transmitted to the reception task (Et1S) of the slave (S) using the message handler (NhS) of the slave (S) if the queue (Ws) does not store any message references or messages, and the message reference (N2r) otherwise first of all being stored in the queue (Ws), the message copy (KoN2) being transmitted to the reception task (Et1S) of the slave (S) after the message reference (N2r) has been read from the queue (Ws), or
- by virtue of the second message (N2) being transmitted to the message handler (NhM) of the master (M) using the message handler (NhS) of the slave (S) for forwarding to the reception task (Et1M) of the master (M), the message handler (NhM) of the master (M) transmitting the message (N2) to the message handler (NhS) of the slave (S), the message (N2) being transmitted to the reception task (Et1S) of the slave (S) using this message handler (NhS) if the queue (Ws) does not store any message references or messages, and the message (N2) otherwise being entered in the queue (Ws) for forwarding to the reception task (Et1S).

3. Method according to Claim 1 or 2, **characterized in that** a third transmission task of one of the subsystems (M, S) is used to transmit a third message (N3) to a third reception task (Et3M, Et3S) of this subsystem (M, S) by virtue of the message handler (NhM, NhS) of this subsystem (M, S) being used to transmit this message (N3) to the third reception task (Et3M, Et3S) of this subsystem (M, S).

4. Method according to one of Claims 1 to 3, **characterized in that** a fourth transmission task of each subscriber (M, S) is used to transmit a fourth message (N4) only to a fourth reception task (Et4M, Et4S) of one of the subscribers (M, S) by virtue of this message (N4) being forwarded to the reception task (Et4M, Et4S) of the respective subsystem (M, S) by the message handler (NhM, NhS) of the respective subsystem (M, S) only if this message handler (NhM, NhS) detects that this subsystem (M, S) is the recipient of this message (N4).

5. Redundant automation system provided with a first subsystem and a second subsystem (M, S),
- one of the subsystems operating as a master (M) and the other subsystem operating as a slave (S),
- the subsystems (M, S) being provided with transmission tasks and reception tasks in order to transmit and receive messages,
**characterized in that** the automation system is designed to transmit a first message (N1) both from a first transmission task of the master (M) to a first reception task (Et1M) of the master (M) and from a first transmission task of the slave (S) to a first reception task (Et1S) of the slave (S) by virtue of
- a message handler (NhM) of the master (M) forwarding the first message (N1) to the reception task (Et1M) of the master (M) and transmitting a message reference (N1r) to a message handler (NhS) of the slave (S) for entry in a queue (Ws) of the slave (S), the queue (Ws) being intended to indicate the transmission sequence of messages transmitted using the master (M),
- the message handler (NhS) of the slave (S) forwarding the first message (N1), after the message reference (N1r) has been read from the queue (Ws), to the reception task (Et1S) of the slave (S).

6. Redundant automation system according to Claim 5, **characterized in that** the automation system is designed
- to transmit a second message (N2) both to the first reception task (Et1M) of the master (M) and to the first reception task (Et1S) of the slave (S) using a second transmission task of the master (M) by virtue of the message handler (NhM) of the master (M) supplying this message (N2) to the reception task (Et1M) of the master (M) and transmitting a copy of this message (KoN2) to the message handler (NhS) of the slave (S), which forwards the message copy (KoN2) to the reception task (Et1S) of the slave (S) if the queue (Ws) does not store any message references or messages, and otherwise enters the copy of this message (KoN2) in the queue (Ws) of the slave (S) for forwarding to the reception task (Et1S), or
- to transmit the second message (N2) both to the first reception task (Et1S) of the slave (S) and to the first reception task (Et1M) of the master (M) using a second transmission task of the slave (S)
- by virtue of the message handler (NhS) of the slave (S) storing this message (N2) and transmitting a copy of this further message (KoN2) to the message handler (NhM) of the master (M) for forwarding to the reception task (Et1M) of the master (M), the message handler (NhM) of the master (M) transmitting a further message reference (N2r) to the message handler (NhS) of the slave (S), the message handler (NhS) of the slave (S) forwarding the message (N2) to the reception task (Et1S) of the slave (S) if the queue (Ws) does not store any message references or messages, and otherwise entering the further message reference (N2r) in the queue (Ws) in order to forward the message copy (KoN2) to the reception task (Et1S), or
- by virtue of the message handler (NhS) of the slave (S) transmitting the second message (N2) to the message handler (NhM) of the master (M) for forwarding to the reception task (Et1M) of the master (M), the message handler (NhM) of the master (M) transmitting this message (N2) to the message handler (NhS) of the slave (S), this message handler (NhS) forwarding the message (N2) to the reception task (Et1S) of the slave (S) if the queue (Ws) does not store any message references or messages, and otherwise entering the message (N2) in the queue (Ws) for forwarding to the reception task (Et1S).

7. Redundant automation system according to Claim 5 or 6, **characterized in that** the automation system is also designed to use a third transmission task of one of the subsystems (M, S) to transmit a third message (N3) to a third reception task (Et3M, Et3S) of this subsystem (M, S) by virtue of the message handler (NhM, NhS) of this subsystem (M, S) transmitting this message (N3) to the reception task (Et3M, Et3S) of this subsystem (M, S).

8. Redundant automation system according to one of Claims 5 to 7, **characterized in that** the automation system is also designed to use a fourth transmission task of each subscriber (M, S) to transmit a fourth message (N4) only to a fourth reception task (Et4M, Et4S) of one of the subscribers (M, S) by virtue of the message handler (NhM, NhS) of the respective subsystem (M, S) forwarding this message (N4) to the fourth reception task (Et4M, Et4S) of the respective subsystem (M, S) only if this message handler (NhM, NhS) detects that this subsystem (M, S) is the recipient of this fourth message (N4).

## Revendications

1. Procédé pour faire fonctionner un système d'automatisation redondant, pourvu d'un premier et d'un deuxième sous-systèmes, dans lequel
- on fait fonctionner l'un des sous-systèmes comme maître ( M ) et l'autre sous-système comme esclave ( S ),
- les sous-systèmes ( M, S ) sont pourvus de tâches d'émission et de réception pour émettre et recevoir des messages,
**caractérisé en ce qu'**un premier message ( N1 ) est transmis à la fois d'une première tâche d'émission du maître ( M ) à une première tâche ( Et1M ) de réception du maître ( M ) et d'une première tâche d'émission de l'esclave ( S ) à une première tâche ( Et1S ) de réception de l'esclave ( S ), en
- acheminant le premier message ( N1 ) au moyen d'un manipulateur ( NhM ) de messages du maître ( M ) à la tâche ( Et1M ) de réception du maître ( M ) et, en outre, au moyen de ce manipulateur ( NhM ) de messages, en transmettant au manipulateur ( NhS ) de messages de l'esclave ( S ), une référence ( N1r ) de message, pour l'inscrire dans une file ( Ws ) d'attente de l'esclave ( S ), la succession d'émissions de messages transmis au moyen du maître ( M ) étant indiquée dans la file ( Ws ) d'attente,
- après la lecture de la référence ( N1r ) de message dans la file ( Ws ) d'attente au moyen du manipulateur ( NhS ) de messages de l'esclave ( S ), on achemine le premier message ( N1 ), au moyen de ce manipulateur ( NhS ) de messages, à la tâche ( Et1S ) de réception de l'esclave ( S ).

2. Procédé suivant la revendication 1, **caractérisé en ce que**
- on transmet un deuxième message ( N2 ), au moyen d'une deuxième tâche d'émission du maître ( M ), à la fois à la première tâche ( Et1M ) de réception du maître ( M ) et à la première tâche ( Et1S ) de réception de l'esclave ( S ), en envoyant ce message ( N2 ), au moyen du manipulateur ( NhM ) de message du maître ( M ), à la tâche ( Et1M ) de réception du maître ( M ) et une copie de ce message ( KoN2 ) au manipulateur ( NhS ) de messages de l'esclave ( S ), la copie ( KoN2 ) de message étant, au moyen de ce manipulateur ( NhS ) de messages, acheminée à la tâche ( Et1S ) de réception de l'esclave ( S ), si des références de messages ou des messages ne sont pas mis dans la file ( Ws ) d'attente, sinon la copie de ce message ( KoN2 ) est inscrite d'abord dans la file ( Ws ) d'attente pour l'acheminement à la tâche ( Et1S ) de réception ou
- on transmet le deuxième message ( N2 ), au moyen d'une deuxième tâche d'émission de l'esclave ( S ), à la fois à la première tâche ( Et1S ) de réception de l'esclave ( S ) et à la première tâche ( Et1M ) de réception du maître ( M ),
- en mémorisant ce deuxième message ( N2 ), au moyen du manipulateur ( NhS ) de messages de l'esclave ( S ), et en acheminant une copie de ce message ( KoN2 ) du maître ( M ) à la tâche ( Et1M ) de réception du maître ( M ), une autre référence ( N2r ) de message étant transmise au manipulateur ( NhS ) de messages de l'esclave ( S ) par le manipulateur ( NhM ) de messages du maître ( M ), le message ( N2 ) mémorisé de la tâche ( Et1S ) de réception de l'esclave ( S ) étant transmis au moyen du manipulateur ( NhS ) de messages de l'esclave ( S ) si des références de messages ou des messages ne sont pas mis dans la file ( Ws ) d'attente, sinon la référence ( N2r ) de message est d'abord mise dans la file ( Ws ) d'attente, la copie ( KoN2 ) de message étant, après la lecture de la référence ( N2r ) de message dans la file ( Ws ) d'attente, transmise à la tâche ( Et1S ) de réception de l'esclave ( S ) ou
- en transmettant le deuxième message ( N2 ), au moyen du manipulateur ( NhS ) de messages de l'esclave ( S ), au manipulateur ( NhM ) de messages du maître ( M ), pour l'acheminement à la tâche ( Et1M ) de réception du maître ( M ), le message étant transmis au manipulateur ( NhS ) de messages de l'esclave ( S ) par le manipulateur ( NhM ) de messages du maître, le message ( N2 ) étant transmis à la tâche ( Et1S ) de réception de l'esclave ( S ) au moyen de ce manipulateur ( NhS ) de messages, si des références de messages ou des messages ne sont pas mis dans la file ( Ws ) d'attente, sinon le message ( N2 ) est mis dans la file ( Ws ) d'attente pour l'acheminement à la tâche ( Et1S ) de réception.

3. Procédé suivant la revendication 1 ou 2, **caractérisé en ce que** l'on transmet un troisième message ( N3 ), au moyen d'une troisième tâche d'émission de l'un des sous-systèmes ( M, S ) à une troisième tâche ( Et3M, Et3S ) de réception de ce sous-système ( M, S ), en transmettant, au moyen de ce manipulateur ( NhM, NhS ) de messages de ce sous-système ( M, S ), ce message ( N3 ) à la troisième tâche ( Et3M, Et3S ) de réception de ce sous-système ( M, S ).

4. Procédé suivant l'une des revendications 1 à 3, **caractérisé en ce que** l'on ne transmet un quatrième message ( N4 ), au moyen d'une quatrième tâche d'émission de chaque sous-système ( M, S ), seulement à une quatrième tâche ( Et4M, Et4S ) de réception de l'un des participants ( M, S ), en acheminant ce message ( N4 ) seulement par le manipulateur ( NhM, NhS ) de messages du sous-système ( M, S ) respectif à la tâche ( Et4M, Et4S ) de réception du sous-système ( M, S ) respectif, que si ce manipulateur ( NhM, NhS ) de messages reconnaît que ce sous-système ( M, S ) est le récepteur de ce message ( N4 ).

5. Système d'automatisation redondant, pourvu d'un premier et d'un deuxième sous-systèmes ( M, S ), dans lequel
- l'un des sous-systèmes opère comme maître et l'autre sous-système comme esclave ( S ),
- les sous-systèmes ( M, S ) sont munis de tâches d'émission et de tâches de réception, pour l'émission et la réception de messages,
**caractérisé en ce que** le système d'automatisation est constitué pour transmettre un premier message ( N1 ) à la fois d'une première tâche d'émission du maître ( M ) à une première tâche ( Et1M ) de réception du maître ( M ) et d'une première tâche d'émission de l'esclave ( S ) à une première tâche ( Et1S ) de réception de l'esclave ( S ), **en**
- **ce qu'**un manipulateur ( NhM ) de messages du maître ( M ) achemine le premier message ( N1 ) à la tâche ( Et1M ) de réception du maître ( M ) et transmet une référence ( N1r ) de message pour l'inscription dans une file ( Ws ) d'attente de l'esclave ( S ) à un manipulateur ( NhS ) de messages de l'esclave ( S ), la file ( Ws ) d'attente étant prévue pour indiquer la succession d'émissions de messages transmis au moyen du maître ( M ),
- le manipulateur ( NhS ) de messages de l'esclave ( S ) achemine, après la lecture de la référence ( N1r ) de message dans la file ( Ws ) d'attente, le premier message ( N1 ) à la tâche ( Et1S ) de réception de l'esclave ( S ) .

6. Système d'automatisation redondant suivant la revendication 5, **caractérisé en ce que** le système d'automatisation est constitué pour
- transmettre un deuxième message ( N2 ), au moyen d'une deuxième tâche d'émission du maître ( M ), à la fois à la première tâche ( Et1M ) de réception du maître ( M ) et à la première tâche ( Et1S ) de réception de l'esclave ( S ), par le fait que le manipulateur ( NhM ) de messages du maître ( M ) envoie ce message ( N2 ) à la tâche ( Et1M ) de réception du maître ( M ) et transmet une copie de ce message ( KoN2 ) au manipulateur ( NhS ) de messages de l'esclave ( S ), qui achemine la copie ( KoN2 ) de message à la tâche ( Et1S ) de réception de l'esclave ( S ), si des références de messages ou des messages ne sont pas mis dans la file ( Ws ) d'attente, sinon la copie de ce message ( KoN2 ) est inscrite dans la file ( Ws ) d'attente de l'esclave ( S ) pour l'acheminement à la tâche ( Et1S ) de réception ou
- transmettre le deuxième message ( N2 ), au moyen d'une deuxième tâche d'émission de l'esclave ( S ), à la fois à la première tâche ( Et1S ) de réception de l'esclave ( S ) et à la première tâche ( Et1M ) de réception du maître ( M ),
- par le fait que le manipulateur ( NhS ) de messages de l'esclave ( S ) mémorise ce message ( N2 ) et transmet une copie de cet autre message ( KoN2 ) au manipulateur ( NhM ) de messages du maître ( M ) pour l'acheminement à la tâche ( Et1M ) de réception du maître ( M ), le manipulateur ( NhM ) de messages du maître ( M ) transmettant au manipulateur ( NhS ) de messages de l'esclave ( S ), une autre référence ( N2r ) de message, le manipulateur ( NhS ) de messages de l'esclave ( S ) acheminant le message ( N2 ) à la tâche ( Et1S ) de réception de l'esclave ( S ) s'il n'y a pas de référence de message ou de message mis dans la file ( Ws ) d'attente, sinon l'autre référence ( N2r ) de message est mise dans la file ( Ws ) d'attente pour l'acheminement de la copie ( KoN2 ) de message à la tâche ( Et1S ) de réception ou
- par le fait que le manipulateur ( NhS ) de message de l'esclave ( S ) transmet le deuxième message ( N2 ) au manipulateur ( NhM ) de messages du maître ( M ) pour l'acheminement à la tâche ( Et1M ) de réception, le manipulateur ( NhM ) de messages du maître ( M ) transmettant ce message au manipulateur ( NhS ) de messages de l'esclave ( S ), ce manipulateur ( NhS ) de messages acheminant le message ( N2 ) à la tâche ( Et1S ) de réception de l'esclave ( S ), s'il n'y a pas de référence de message ou de message mis dans la file ( Ws ) d'attente, sinon le message ( N2 ) est inscrit dans la file ( Ws ) d'attente pour l'acheminement à la tâche ( Et1S ) de réception.

7. Système d'automatisation redondant suivant la revendication 5 ou 6, **caractérisé en ce que** le système d'automatisation est conçu en outre pour transmettre un troisième message ( N3 ) au moyen d'une troisième tâche d'émission de l'un des sous-systèmes ( M, S ) à une troisième tâche ( Et3M, Et3S ) de réception de ce sous-système ( M, S ), par le fait que le manipulateur ( NhM, NhS ) de messages de ce sous-système ( M, S ) transmet ce message ( N3 ) à la tâche ( Et3M, Et3S ) de réception de ce sous-système ( M, S ).

8. Système d'automatisation redondant suivant l'une des revendications 5 à 7, **caractérisé en ce que** le système d'automatisation est constitué en outre pour transmettre un quatrième message ( N4 ), au moyen d'une quatrième tâche d'émission, à chaque participant ( M, S ), seulement à une quatrième tâche ( Et4M, Et4S ) de réception de l'un des participants ( M, S ), par le fait que le manipulateur ( NhM, NhS ) de messages du sous-système ( M, S ) respectif achemine ce message ( N4 ) à la quatrième tâche ( Et4M, Et4S ) de réception, seulement si ce manipulateur ( NhM, NhS ) de messages reconnaît que ce sous-système ( M, S ) est le récepteur de ce quatrième message ( N4 ).
